# EUROPÄISCHE PATENTSCHRIFT

(11) **EP 2 675 753 B1**
(45) Veröffentlichungstag und Bekanntmachung des Hinweises auf die Patenterteilung: **10.05.2017**
(21) Anmeldenummer: 12700688.0
(22) Anmeldetag: 19.01.2012
(51) Int. Cl.: C01B 33/107, B01J 31/02

(54) **MONOCHLORSILAN, VERFAHREN UND VORRICHTUNG ZU DESSEN HERSTELLUNG**
MONOCHLOROSILANE, PROCESS AND APPARATUS FOR PRODUCING SAME
MONOCHLOROSILANE, PROCÉDÉ ET DISPOSITIF DE PRODUCTION DE MONOCHLOROSILANE

(30) Priorität: 14.02.2011 DE 102011004058
(43) Veröffentlichungstag der Anmeldung: 25.12.2013
(73) Patentinhaber: Evonik Degussa GmbH, 45128 Essen (DE)
(72) Erfinder: MÜH, Ekkehard, 79618 Rheinfelden (DE); RAULEDER, Hartwig, 79618 Rheinfelden (DE); LANG, Jürgen, Erwin, 76229 Karlsruhe (DE); SCHORK, Reinhold, 64689 Grasellenbach (DE)
(86) Internationale Anmeldenummer: PCT/EP2012/050754
(87) Internationale Veröffentlichungsnummer: WO 2012/110275

(56) Entgegenhaltungen:
- WO-A1-2007/039326
- WO-A1-2011/006697
- DE-A1- 2 507 864
- DE-A1-102007 059 170

## Beschreibung

Die Erfindung betrifft ein Verfahren zur Herstellung von Monochlorsilan aus der Umsetzung von Monosilan und Dichlorsilan in Gegenwart eines Katalysators. Nach dem erfindungsgemäßen Verfahren wird Monochlorsilan durch Komproportionierung von Monosilan und Dichlorsilan gebildet. Ferner betrifft die Erfindung die Verwendung des hergestellten Monochlorsilans als auch eine Anlage zur Durchführung des Verfahrens.

Anorganische Si-Verbindungen, wie Tetrachlorsilan, Trichlorsilan, Dichlorsilan und auch Monosilan werden zur Abscheidung von hochreinen Si-Schichten eingesetzt, bspw. in der Halbleiterindustrie, und in jüngster Zeit auch in der Solarindustrie. Daher sind für die vorstehend genannten Verbindungen auch technische Herstellprozesse bekannt. Eine Ausnahme bildet Monochlorsilan, für das bislang kein Verfahren bekannt es, um es in technischen Mengen und der geforderten hohen Reinheit bereitzustellen. Daher wird H₃SiCl bislang auch nicht für die Abscheidung von Silizium bspw. als Silizium-Stangen (bulk Silizium) oder Silizium-Schichten verwendet.

Zudem sind chlorierte H-Silane, wie Trichlorsilan, wertvolle Ausgangsverbindungen zur Herstellung von Si-Verbindungen, die organische Reste enthalten, bspw. von Trimethylsilan [HSi(CH₃)₃], eine für die Halbleiterindustrie wichtige Substanz. Vergleichbare Prozesse zur Herstellung von organofunktionellen Siliziumverbindungen ausgehend von Monochlorsilan sind auf Grund dessen Nichtverfügbarkeit nicht bekannt.

GB 761205 offenbart ein Verfahren, indem Trichlorsilan katalytisch zur Herstellung von Dichlorsilan disproportioniert/dismutiert wird. Monochlorsilan fällt lediglich als Nebenprodukt der Dismutierung aus Trichlorsilan in geringsten Mengen an.

Die WO 2006/029930 A1 beschreibt Monochlorsilan lediglich als intermediäres Zwischenprodukt, das sich durch eine Folge von Dismutierungen (Disproportionierung) ausgehend von Trichlorsilan bilden kann.

DE 3711444 A1 offenbart ein Verfahren zur Herstellung von Dichlorsilan durch Dismutierung (Disproportionierung) von Trichlorsilan, in dem gasförmiges Dichlorsilan zwischen 10 °C und dem Siedepunkt des entstehenden Reaktionsgemisches dem Reaktor entnommen und gewonnen wird, wobei Trichlorsilananteile kondensiert und in den Reaktor zurückgeführt werden und die flüssige Reaktionsphase teilweise dem Reaktor entnommen wird und Tetrachlorsilan und in den Reaktor zurückzuführendes Trichlorsilan getrennt wird.

DE 10 2007 059 170 A1 stellt ein Verfahren vor zur Dismutierung von Wasserstoff enthaltenden Halogensilanen, wie Trichlorsilan, für die Herstellung niedrig chlorierter Silane vor, wie Monochlorsilan, in Gegenwart eines Katalysators.

WO 2007/039326 A1 offenbart ein Verfahren zur Herstellung von Monosilan und Tetrachlorsilan durch katalytische Dismutierung von Trichlorsilan, in dessen Verlauf Monochlorsilan als Zwischenprodukt gebildet und weiter umgesetzt wird.

Wie aufgezeigt, ist Monochlorsilan bislang nicht wirtschaftlich über den Weg der Disproportionierung (Dismutierung) von TCS zugänglich.

Es bestand daher die Aufgabe, reines Monochlorsilan in technischem Maßstab zugänglich zu machen. Insbesondere bestand die Aufgabe ein Verfahren zur Herstellung von Monochlorsilan bereitzustellen, in dem Monochlorsilan in großtechnischem Maßstab, rein und in wesentlichen Mengen in Bezug auf die eingesetzten Edukte gebildet wird. Eine besondere Aufgabe bestand darin Monochlorsilan technisch in hochreiner Form zugänglich zu machen, und einen großtechnischen Prozess zur gezielten Herstellung von Monochlorsilan zu entwickeln. Der Prozess zur Herstellung von Monochlorsilan soll zudem wirtschaftlich sein. Eine weitere Aufgabe bestand in der Bereitstellung einer Anlage zur ökonomischen Durchführung des Prozesses. Ein besonderer Vorteil des erhaltenen Monochlorsilans liegt in der deutlich geringeren Chlorid-Belastung der Anlagen bzw. Anlagenteile bei der späteren Abscheidung zu Silizium. Hinzutreten ein geringere Energieaufwand bei der Abscheidung und ein deutlich geringeres Transportgewicht bezogen auf den Si-Anteil in Vergleich zu den höher chlorierten Silanen.

Gelöst werden die Aufgaben gemäß den unabhängigen Ansprüchen, bevorzugte Ausführungsformen sind in den Unteransprüchen sowie detailliert in der Beschreibung dargelegt.

Es wurde nun völlig überraschend gefunden, dass Monochlorsilan in einem katalytischen Komproportionierungs-Prozess gemäß Reaktionsgleichung 1

### Kat.

SiH₄ + H₂SiCl₂ ⇆ 2 H₃SiCl (1)

kontinuierlich aus Monosilan (SiH₄) und Dichlorsilan (H₂SiCl₂) gewonnen werden kann.

Vorzugsweise wird Monochlorsilan in Bezug auf die eingesetzte Menge in Mol (100 Mol-%) der beiden Edukte Monosilan und Dichlorsilan deutlich mit über 5 Mol-%, vorzugsweise zwischen 5 bis 10 Mol-% je Verfahrensstufe gebildet, in Bezug auf die eingesetzte Menge an Edukten in Mol. Erfindungsgemäß werden Monosilan und Dichlorsilan dem Verfahren in einem definierten molaren Verhältnis von 13 : 1 bis 8 : 1 zugeführt.

Besonders bevorzugt werden 92 Mol-% Monosilan und 8 Mol-% Dichlorsilan in das Verfahren eingesetzt, wobei die Schwankungsbreite auf 100 % bezogen plus/minus 5 %, bevorzugt plus/minus 2% beträgt. Die Ausbeute an Monosilan kann auf über 12 Mol-%, insbesondere auf 15 Mol-% in Bezug auf die eingesetzten Edukte gesteigert werden, wenn das gebildete Monochlorsilan (MCS) nach einer Umsetzung abgetrennt wird und das verbliebenen Monosilan und Dichlorsilan mit einer definierten Zusammensetzung erneut der Verfahrensstufe zugeführt oder einer nachfolgenden Verfahrensstufe zugeführt werden. Indem das aus dem Rohprodukt abgetrennte Monosilan und Dichlorsilan in definiertem Verhältnis im Zyklus gefahren wird, können die höchsten Ausbeuten (in Mol-%) an Monochlorsilan erzielt werden. Erfindungsgemäß werden Monosilan und/oder Dichlorsilan dem Verfahren in einem definierten Verhältnis zugeführt, das nachstehend immer mol : mol bedeutet, im Verhältnis von 13 : 1 bis 8 : 1. Der erfindungsgemäße Vorteil der Komproportionierung von Monosilan und Dichlorsilan zu Monochlorsilan besteht darin, dass keine Nebenprodukte abzutrennen sind. Die Auftrennung von Monosilan (Sdp. -111,9 °C), Monochlorsilan (Sdp.: - 30,4 °C) und Dichlorsilan (Sdp.: 8,3 °C) kann daher bei niedrigen Temperaturen und mit geringstem Energieaufwand erfolgen.

Nach einer besonders bevorzugten Alternative des erfindungsgemäßen Verfahrens kann bei der Umsetzung von Monosilan und Dichlorsilan im Wesentlichen die Bildung von Trichlorsilan und/oder Tetrachlorsilan unterdrückt werden, insbesondere, wenn Monosilan und Dichlorsilan in einem definierten molaren Verhältnis in Gegenwart eines Katalysators umgesetzt werden, insbesondere wenn sie als Edukte in einem definierten Verhältnis zugeführt werden. Es ist weiter bevorzugt, wenn Monosilan und Dichlorsilan in einem definierten Verhältnis miteinander umgesetzt werden, bei dem überwiegend eine Komproportionierung erfolgt, wie im Bereich von 15 : 1 bis 6 : 1 (MS : DCS). In erfindungsgemäßen Verfahren wird im gesamten Rohprodukt Trichlorsilan (TCS) zu unter 30 % (GC) und/oder Tetrachlorsilan (TCS) zu unter 4,0 %, vorzugsweise TCS unter 5 % bis 0,01 % gebildet, besonders bevorzugt unter 4 %, unter 3 %, unter 2 %, weiter bevorzugt unter 1,5 %.

Das Verfahren zur Herstellung von Monochlorsilan wird vorzugsweise in einer Anlage durchgeführt, die einen Reaktionsbereich umfasst, der den Katalysator zur Umsetzung von Monosilan und Dichlorsilan enthält. Vorzugsweise ist mindestens ein Reaktionsbereich in einem Reaktor, wie einer Reaktivkolonne oder einem Rohrreaktor vorgesehen. Das im Reaktionsbereich des Reaktors aus der Umsetzung von Monosilan und Dichlorsilan gebildete Rohprodukt wird in mindestens einen nachgeschalteten thermischen Trennverfahrensschritt überführt und Monochlorsilan gegebenenfalls im Gemisch mit höher chlorierten Silanen gewonnen. Vorzugsweise wird Monochlorsilan in einem nachgeschalteten thermischen Trennverfahrensschritt aus dem Rohprodukt abgetrennt, wobei vorzugsweise Monosilan und Dichlorsilan der Umsetzung, insbesondere der Komproportionierung, wieder zugeführt werden. Vorzugsweise wird das Rohrprodukt mehreren thermischen Trennverfahrensschritten unterzogen und Monochlorsilan rein isoliert. Vorzugsweise werden die thermischen Trennverfahrensschritte in Kolonnen, besonders bevorzugt in Rektifikationskolonnen, durchgeführt.

Gegenstand der Erfindung ist ein Verfahren zur Herstellung von Monochlorsilan, indem Monosilan und Dichlorsilan, insbesondere als Edukte, in Gegenwart eines Katalysators umgesetzt werden und Monochlorsilan gebildet wird. In einem erfindungsgemäßen Verfahren werden Monosilan und Dichlorsilan in einem definierten molaren Verhältnis der Umsetzung zugeführt. Durch diese Maßnahme wird auch zugleich das molare Verhältnis von Monosilan und Dichlorsilan während der Umsetzung gesteuert. In dem erfindungsgemäßen Verfahren werden Monosilan und Dichlorsilan als Edukte dem Verfahren zugeführt, um unter katalytischen Bedingungen Monochlorsilan zu bilden. Besonders bevorzugt werden in dem erfindungsgemäßen Verfahren Monosilan und Dichlorsilan in Gegenwart eines Katalysators komproportioniert, insbesondere werden Monosilan und Dichlorsilan zu Monochlorsilan komproportioniert. Das Verfahren kann satzweise oder vorzugsweise kontinuierlich durchgeführt werden. Erfindungsgemäß wird Monochlorsilan in einem kontinuierlichen Verfahren aus Monosilan und Dichlorsilan gebildet.

Unter technisch reinem Monosilan wird Monosilan mit einer Reinheit größer 97% verstanden.

Unter technischem Maßstab wird vorliegend bevorzugt die kontinuierliche Herstellung von mindestens 10 g/h Monochlorsilan aus Monosilan und Dichlorsilan verstanden, vorzugsweise mindestens 100 g/h, besonders bevorzugt mindestens 1 kg/h. Bei einer satzweisen Herstellung sollen vorzugsweise 5 kg, besonders bevorzugt 25 kg Monochlorsilan je Ansatz herstellbar sein. Nach dem erfindungsgemäßen Verfahren können Monosilan und Dichlorsilan einem Reaktionsbereich oder einem Reaktor zugeführt werden, insbesondere werden sie getrennt, im Gemisch oder im Gegenstrom zugeführt. Der Reaktor, umfassend einen Reaktionsbereich, kann ein Rohrreaktor oder eine Reaktivkolonne sein, wobei die Reaktivkolonne gegebenenfalls mehrere Reaktionszonen umfassen kann, wie bspw. Verteilerböden, Glockenböden, etc.

Gemäß einer Alternative der Erfindung wird die Komproportionierung, insbesondere die heterogen katalysierte Komproportionierung, von Monosilan und Dichlorsilan in einem Reaktor, insbesondere einem Rohrreaktor, vorzugsweise in mehreren, vorzugsweise 2 bis 10 Rohrreaktoren, die in Reihe oder parallel geschalten sind, durchgeführt. Alternativ wird das im Verfahren aus dem Rohprodukt abgetrennte Monosilan und Dichlorsilan im Kreislauf immer wieder in den Reaktor, insbesondere den Rohrreaktor zurückgeführt, das gebildete Monochlorsilan wird aus dem Rohprodukt abgetrennt. Dabei ist es besonders bevorzugt, wenn in die jeweiligen Reaktionsbereiche der Reaktoren, insbesondere der Rohrreaktoren Monosilan und Dichlorsilan in einem definierten Verhältnis zugeführt werden.

Das Verhältnis von Monosilan zu Dichlorsilan beträgt für eine Umsetzung zu Monochlorsilan 13 : 1 bis 8 : 1. Im diesem Bereich werden Monosilan und Dichlorsilan zu Monochlorsilan komproportioniert. Ein Verhältnis von etwa 11,5 : 1 bis 9 : 1 ggf. mit einer Schwankungsbreite von 12 : 1 bis 6 : 1 ist weiter bevorzugt. Außerhalb des Bereiches von 13 : 1 bis 8 : 1 erfolgt verstärkt Disproportionierung. Bei der Komproportionierung werden keine Nebenprodukte wie TCS und/oder STC gebildet und müssen abgetrennt werden. Erfindungsgemäß werden Monosilan und/oder Dichlorsilan dem Verfahren in einem definiertem Verhältnis zugeführt, nämlich im Verhältnis von 13 : 1 bis 8 : 1, bei dem sich im Wesentlichen kein Trichlorsilan und/oder Tetrachlorsilan bilden, d. h. unter Bedingungen einer Komproportionierung. TCS bildet sich unter diesen Bedingungen vorzugsweise unter 1 mol-% nach Umsetzung im dritten Rohrreaktor. Die Bildung von Trichlorsilan kann als Indikator für einen Wechsel von der Komproportionierung zur Disproportionierung verwendet werden.

Die Reaktionsbedingungen werden auf eine Temperatur von -50 bis 200 °C eingestellt und innerhalb eines Druckbereiches von 0,0001 bis 200 bar. Vorzugsweise werden die Temperatur auf um 40 °C und ein Druck etwa 30 bar(abs.) eingestellt. Der Druck ist immer absolut (bar_{abs}).

Gemäß einer bevorzugten Alternative wird das Verfahren mit geringem Energieaufwand bei leicht erhöhter Temperatur und innerhalb eines Druckbereiches von 0,1 bis 100 bar bei 25 bis 60° durchgeführt, vorzugsweise bei 30 bis 50 °C und 20 bis 40 bar, besonders bevorzugt um 40 °C und um 30 bar.

Gemäß einer Alternative der Erfindung wird die Komproportionierung, insbesondere die heterogen katalysierte Komproportionierung, von Monosilan und Dichlorsilan in einem als Reaktivkolonne ausgeführten Reaktor mit Reaktionsbereich(en) durchgeführt.

Nach dem erfindungsgemäßen Verfahren wird zumindest ein Teil des Rohproduktes, vorzugsweise das gesamte Rohprodukt, der Umsetzung in mindestens einem nachgeschalteten thermischen Trennverfahrensschritt in die einzelnen Silane Monochlorsilan sowie Monosilan, Dichlorsilan und gegebenenfalls Trichlorsilan sowie ggf. Tetrachlorsilan aufgetrennt. Unter Rohprodukt wird das Umsetzungsprodukt, d. h. das gebildete Gemisch, aus der Umsetzung der zugeführten Edukte Monosilan und Dichlorsilan ggf. in Gegenwart eines Katalysators und ggf. in Gegenwart von Trichlorsilan und/oder Tetrachlorsilan verstanden. Besonders bevorzugt wird das erfindungsgemäße Verfahren mit einem definierten Verhältnis von Monosilan zu Dichlorsilan durchgeführt, bei dem sich im Wesentlichen keine Nebenprodukte wie Trichlorsilan und/oder Tetrachlorsilan bilden, weil die Umsetzung im Wesentlichen als Komproportionierung abläuft. Der nachgeschaltete mindestens eine thermische Trennverfahrensschritt ist vorzugsweise eine Destillation, besonders bevorzugt eine Rektifikation, in der eine Auftrennung in Monochlorsilan sowie Monosilan und Dichlorsilan sowie Trichlorsilan erfolgt. Zweckmäßig kann auch eine Verdampfung mittels dem Fachmann bekannter Verdampfer, wie bspw. einem Dünnschichtverdampfer sein. Es kann weiter bevorzugt sein, mehrere Destillationsschritte, insbesondere Rektifikationsschritte anzuschließen, um die gewünschte Reinheit der Produkte Monochlorsilan, Trichlorsilan oder Tetrachlorsilan einzustellen. Monosilan und Dichlorsilan werden nach dem erfindungsgemäßen Verfahren wieder als Edukte dem Verfahren zugeführt und können daher auch als Gemisch ggf. mit Anteilen der anderen Produkte (Monochlorsilan, geringste Mengen an TCS) rückgeführt oder einem nachfolgenden Reaktionsbereich der nächsten Verfahrensstufe zugeführt werden, d. h. einem zweiten und/oder dritten Reaktor zugeführt werden.

Nach einer besonders bevorzugten Alternative der Erfindung wird Monochlorsilan an einem Seitenstrom einer Rektifikationskolonne entnommen. Nach weiteren bevorzugten Alternativen wird Monochlorsilan als Kopfprodukt zusammen mit Monosilan und Dichlorsilan entnommen und über nachfolgende Kolonnen in die einzelnen Verbindungen aufgetrennt. Wie ausgeführt, werden nach der Umsetzung vorhandenes, nicht umgesetztes und/oder gebildetes Monosilan und/oder Dichlorsilan jeweils unabhängig oder im Gemisch dem Reaktionsbereich oder Reaktor wieder zugeführt und/oder nachfolgenden Reaktionsbereichen im Verfahren zugeführt. Insbesondere das aus dem Rohprodukt mittels thermischer Trennverfahrensschritte abgetrennte Monosilan und/oder Dichlorsilan wird dem Verfahren wieder als Edukte zugeführt. Weiter ist es bevorzugt, dass Monosilan und/oder Dichlorsilan nur in dem Maße als Edukte dem Verfahren, insbesondere dem Reaktionsbereich oder Reaktor, zugeführt werden, wie Monosilan und/oder Dichlorsilan in dem Verfahren verbraucht werden.

Das Verfahren zur Herstellung von Monochlorsilan aus Monosilan und Dichlorsilan wird in Gegenwart eines Katalysators in homogener oder heterogener Phase durchgeführt. Vorzugsweise erfolgt die Komproportionierung unter heterogenen Katalysebedingungen. In dem Verfahren wird als Katalysator eine Stickstoff enthaltende Verbindungen als Komproportionierungskatalysator eingesetzt. Vorzugsweise enthalten die Verbindungen geträgerten oder festen unlöslichen Stickstoff.

Gegenstand der Erfindung ist somit auch die Verwendung von Stickstoff enthaltenden Verbindungen, insbesondere als feste Phase, in einem Verfahren zur Komproportionierung umfassend die Edukte Monosilan und Dichlorsilan, insbesondere in einem Verfahren nach einem der Ansprüche 1 bis 11. Gegenstand der Erfindung ist auch die Verwendung von Stickstoff enthaltenden Verbindungen als Katalysator zur Komproportionierung in einem Verfahren zur Herstellung mindestens eines Halogensilans, indem als Edukte Monosilan und Dichlorsilan eingesetzt werden, insbesondere zur Herstellung von Monochlorsilan, zweckmäßig auch zur Herstellung von Trichlorsilan, Monosilan und/oder Tetrachlorsilan.

Ein bevorzugter Katalysator ist geträgert, insbesondere ist er chemisch an das Trägermaterial gebunden. Besonders bevorzugt sind Katalysatoren umfassend ein Aminoalkoxysilan, das vorzugsweise chemisch auf dem Trägermaterial gebunden vorliegt, insbesondere umfasst die Katalysatormasse, ggf. in Form eines Formkörpers, wie kugelförmig oder stabförmig; oder partikelförmig , ein auf einem Trägermaterial chemisch gebundenes Aminoalkoxysilan und ggf. dessen Hydrolyse- und/oder Kondensationsprodukte. Erfindungsgemäß ist der Katalysator ein Aminoalkoxysilan der allgemeinen Formel 1 oder mindestens ein Hydrolyse- und/oder Kondensationsprodukt davon,

(CₓH₂ₓ₊₁O)₃Si(CH₂)_{z}N(C_{y}H_{2y+1})₂ (1)

mit x unabhängig 1, 2, 3 oder 4; mit y unabhängig 1, 2, 3, 4, 5, 6, 7, 8, 9 oder 10 und mit z unabhängig 1, 2 oder 3 sind oder ein daraus abgeleitetes chemisch auf dem Trägermaterial gebundenes monomeres oder oligomeres Aminosilan.
Dabei kann die Gruppe -(C_{y}H_{2y+1}) der Formel 1 sowohl unabhängig eine n-Alkyl, iso-Alkyl und/oder auch ein tert.-Alkyl-Gruppe sein. Besonders bevorzugte Verbindungen der allgemeinen Formel 1 sowie daraus abgeleitete, insbesondere chemisch auf ein Trägermaterial gebundene Aminosilane, sind ausgewählt aus der Gruppe: x = 1, z = 3 und y = 1; x = 2, z = 3, y = 1; x = 1, z = 3, y = 2; x = 2, z = 3, y = 2; x = 1, z = 3 und y = 8; x = 2, z = 3, y = 8; x = 1, z = 3, y = 4; x = 2, z = 3, y = 4.

Bevorzugte Katalysatoren basieren auf Di-isobutylaminopropyltriethoxysilan, Di-n-butylaminopropyltriethoxysilan, Di-tert.-butylaminopropyltriethoxysilan, Dioctylaminopropyltriethoxysilan, Di-isobutylaminopropyltrimethoxysilan, Di-n-butylaminopropyltrimethoxysilan, Di-tert.-butylaminopropyltrimethoxysilan, Dioctylaminopropyltrimethoxysilan.
Gemäß einer weiteren bevorzugten Alternative umfasst das Trägermaterial Siliziumoxid umfassende Formkörper. Als Siliziumdioxid umfassende Formkörper werden insbesondere Granulate, Pellets, kugelförmige SiO₂-Formkörper, Raschigringe oder auch Extrudate oder Strangguss Körper jeglicher Form verstanden. Besonders bevorzugt besteht das Trägermaterial aus SiO₂-Formkörpern, weiter bevorzugt aus kugelförmigen. Weitere bevorzugte Trägermaterialien sind anorganische Materialien, wie Al₂O₃, organische Materialien, wie Polymere, oder Kompositmaterialien, wie hochgefüllte Duroplaste oder Thermoplaste.

Weitere bevorzugt einsetzbare bzw. verwendbare Katalysatoren für die Herstellung von Monochlorsilan als auch für die erfindungsgemäße Verwendung können Amine, Ammoniumsalze, Aminosilane, -siloxane sowie geträgerte Aminosilane, -siloxane sein. NHₙR₃₋ₙ mit n= 0, 1 oder 2 wobei R einem aliphatischen linearen oder verzweigten oder cycloaliphatischen oder aromatischen Kohlenwasserstoff mit 1 bis 18 Kohlenstoffatomen entspricht, wobei die Reste R gleich oder unterschiedlich voneinander sein können. Nicht abschließende Beispiele dafür sind: Trimethylamin, Triethylamin, Tri-n-propylamin, Tri-i-propylamin, Tri-n-butylamin, Tri-i-butylamin, Tri-t-butylamin, Tri-n-pentylamin, Tri-n-hexylamin, Tri-n-heptylamin, Tri-n-octylamin, Tri-n-decylamin, Tri-n-dodecylamin, Tri-i-octylamin. Quarternäre Ammoniumsalze [NHₘR¹₄₋ₘ]⁺ Z⁻ mit m = 0, 1, 2 oder 3, wobei R¹ einem aliphatischen linearen oder verzweigten oder cycloaliphatischen oder aromatischen Kohlenwasserstoff mit 1 bis 18 Kohlenstoffatomen entspricht, wobei die Reste R¹ gleich oder unterschiedlich voneinander sein können und das Anion Z bspw. einem Halogenid entspricht, wie Fluorid, Chlorid, Bromid, Iodid; oder einem Nitrat, Phosphat, Sulfat, Acetat, Formiat, Propionat entspricht. Des Weiteren können N-methyl-2-pyrrolidon, Methylimidazole, Tetramethylharnstoff, Tetramethylguanidin, Trimethylsilylimidazol, Benzothiazol, N,N-dimethylacetamid als Katalysatoren verwendet werden. Ferner können auch Mischungen der genannten Katalysatoren eingesetzt werden. Des Weiteren können als Katalysatoren Ionenaustauscher zum Einsatz kommen, z. B. in Form von Katalysatoren basierend auf mit Divinylbenzol vernetztem Polystyrol-Harz mit tertiären Amin-Gruppen, das durch direkte Aminomethylierung eines Styrol-Divinylbenzol-Copolymerisats hergestellt wird (DE 100 57 521 A1), auf Feststoffen, die an einem Gerüst aus Polystyrol, vernetzt mit Divinylbenzol, Amino- oder Alkylenamino-Gruppen tragen, beispielsweise Dimethylamino-Gruppen (DE 100 61 680 A1, DE 100 17 168 A1), auf Anionen austauschenden Harzen basierende Katalysatoren mit tertiären Aminogruppen oder quarternären Ammoniumgruppen, wie bspw. Amberlyst A21 oder Amberlyst A26 des Herstellers Rohm and Haas (DE 33 11 650 A1), aminfunktionalisierten anorganischen Trägern (DE 37 11 444 A1) oder gemäß DE 39 25 357 Organopolysiloxan-Katalysatoren, wie N[(CH₂)₃SiO_{3/2}]₃. Weiter können bevorzugt auch Silane, Siloxane und geträgerte Silane, Siloxane gemäß der DE 3711444 im Speziellen gemäß der DE 102007059170.7 zum Einsatz kommen. Auf die vorgenannten Patentschriften wird vollständig Bezug genommen und Ihr Inhalt in Bezug auf die Katalysatoren zum Inhalt dieses Dokumentes gemacht.

Das Verfahren zur Umsetzung von Monosilan und Dichlorsilan zur Herstellung von Monochlorsilan wird in einem Temperaturbereich - 50 °C bis 200 °C durchgeführt und innerhalb eines Druckbereichs von 0,0001 bar_{abs} bis 200 bar_{abs}.

Gemäß einer weiteren Alternative kann die Umsetzung im Verfahren auch bevorzugt bspw. zwischen 50 bis 200 °C und insbesondere bei 1 bis 150 bar durchgeführt werden, bevorzugt zwischen 75 bis 180 °C und insbesondere bei 1 bis 40 bar, besonders bevorzugt zwischen 100 bis 175 °C und insbesondere bei 5 bis 30 bar. Als ganz besonders bevorzugt für diese Alternative hat sich ein Temperaturbereich von 140 bis 160 °C plus/minus 20 °C bei einem Druck von 20 bar plus/minus 5 bar erwiesen. Alternativ können Monosilan und Dichlorsilan bevorzugt im molaren Verhältnis von 20 : 1 bis 1 : 20, vorzugsweise 1 : 10 bis 15 : 1 als Edukte dem Verfahren zugeführt werden, insbesondere im molaren Verhältnis von 15 : 1 bis 6 : 1, vorzugsweise von 12 : 1 bis 5 : 2, besonders bevorzugt von etwa um 1 : 1 jeweils unabhängig plus/minus 0,5, bevorzugt plus/minus 0,25. Weiter ist es besonders bevorzugt, wenn jeweils unabhängig das nicht umgesetzte und/oder im Verfahren gebildete Dichlorsilan und Monosilan satzweise, oder bevorzugt kontinuierlich, dem Verfahren als Edukte zugeführt werden. Dem Fachmann ist klar, dass in Anhängigkeit von den Reaktionsbedingungen wie Temperatur und Druck auch Verhältnisse von Monosilan zu Dichlorsilan von 13 : 1 bis 1 : 13 mit allen dazwischen liegenden Verhältnissen sowie um 1 : 1 bevorzugt sein können. Dabei erfolgt die Umsetzung von Monochlorsilan und Dichlorsilan im Verfahren ganz wesentlich mittels Komproportionierung, wenn innerhalb eines Bereiches von etwa 13 : 1 bis 8 : 1, insbesondere etwa 12 : 1 bis 8 : 1, besonders bevorzugt im Bereich von etwa 12 : 1 bis 9 : 1 von Monosilan zu Dichlorsilan gearbeitet wird.

Durch eine Beimischung von Monosilan wird die Disproportionierung von Dichlorsilan zurückgedrängt, d. h. bei einem zu geringem Gehalt an Monosilan im Verhältnis zum Dichlorsilan nimmt der Anteil der Dismutierung zu, während er im Bereich von 13 : 1 bis 8 : 1 stark zurückgedrängt wird und überwiegend die Komproportionierung vorherrscht. Die beiden konkurrierenden Umsetzungen bzw. Reaktionskanäle Komproportionierung und Dismutierung können daher über eine feine Einstellung der Verhältnisse von Monosilan zu Dichlorsilan angesteuert werden.

In einem weiteren Verfahren werden Monosilan und Dichlorsilan in Gegenwart eines Katalysators im Wesentlichen disproportioniert, denn außerhalb des genannten Vorzugsbereiches erfolgt die Umsetzung im Verfahren im Wesentlichen gemäß einer Disproportionierung, d. h. im molaren Verhältnis von 20 : 1 bis 1 : 20 von Monosilan zu Dichlorsilan, wobei der Bereich von etwa 13 : 1 bis 8 : 1 ausgenommen ist, in dem die Komproportionierung vorherrscht, vorzugsweise ausgenommen 12 : 1 bis 9 : 1. Zusätzlich oder alternativ zu einem der vorgenannten Merkmale ist es bevorzugt, wenn die Umsetzung, insbesondere die Komproportionierung, in einem Reaktionsbereich eines Reaktors, wie einer Reaktivkolonne, Rührkessel, Rohrreaktor oder Schlaufenreaktor, durchgeführt wird, vorzugsweise in einer Reaktivkolonne mit mehreren Reaktionsbereichen. Weiter kann zumindest ein Teil des Rohproduktes in mindestens einem nachgeschalteten thermischen Trennverfahrensschritt in die einzelnen Silane Monochlorsilan sowie Monosilan, Dichlorsilan und gegebenenfalls Trichlorsilan und/oder Tetrachlorsilan aufgetrennt werden. Dabei ist es weiter besonders bevorzugt, wenn Monochlorsilan an einem Seitenstrom einer Reaktivkolonne , insbesondere einer Rektifikationskolonne, entnommen wird.

Reines Monochlorsilan hat einen Gehalt (GC) von mindestens 99,5 % bis 99,9% (GC %). Die Reinheit bezüglich metallischer Verunreinigungen beträgt 99,99 bis 99,9999 % d. h. 4n bis 6n, bevorzugt von 99,999 bis 99,9999999 %, d. h. 5n bis 9n als hochreines Monochlorsilan. Der Gehalt von reinem Monochlorsilan wird mittels GC bestimmt und die Reinheit kann nach den, dem Fachmann bekannten Verfahren, wie ICPMS ermittelt werden. Der spezifische Widerstand einer aus diesem Monochlorsilan hergestellten Si-Schicht oder Si-Stab ist größer als 20 Ohm x cm, bevorzugt über 200 Ohm x cm, ganz besonders bevorzugt größer 2000 Ohm x cm. Die Abscheidung kann epitaktisch erfolgen und die Messung via Widerstandsmessung (SRP).

Ein Monochlorsilan mit einem derart hohen Gehalt an Monochlorsilan konnte bislang nicht hergestellt werden, weil bisher kein Verfahren bekannt war, das Monochlorsilan in ausreichenden Mengen bereit stellte, um es dem offenbarten mindesten einen thermischen Trennverfahrensschritt unterziehen zu können und mit dem genannten Gehalt und vorzugsweise in der genannten Reinheit zu isolieren.

Monochlorsilan, insbesondere von reinem Monochlorsilan, besonders bevorzugt von hochreinem Monochlorsilan,kann zur Abscheidung von Silizium, zur Herstellung von hochreinem Silicium und/oder als Epitaxiegas zur Herstellung hochreiner Si-Schichten, insbesondere bei der Chipherstellung oder auch zur Herstellung von organofunktionellen Silanen verwendet werden. Der Vorteil ist die deutlich geringere Belastung der Anlagenteile mit Chlor enthaltenden Gasen, in Bezug auf die Freisetzung an Chlor in Mol je Mol abgeschiedenem Silizium, wobei zugleich deutlich niedrigere Abscheidungstemperaturen realisiert werden können. Damit werden die Verfahren effizienter und die Lebensdauer der Anlagen wird erhöht.

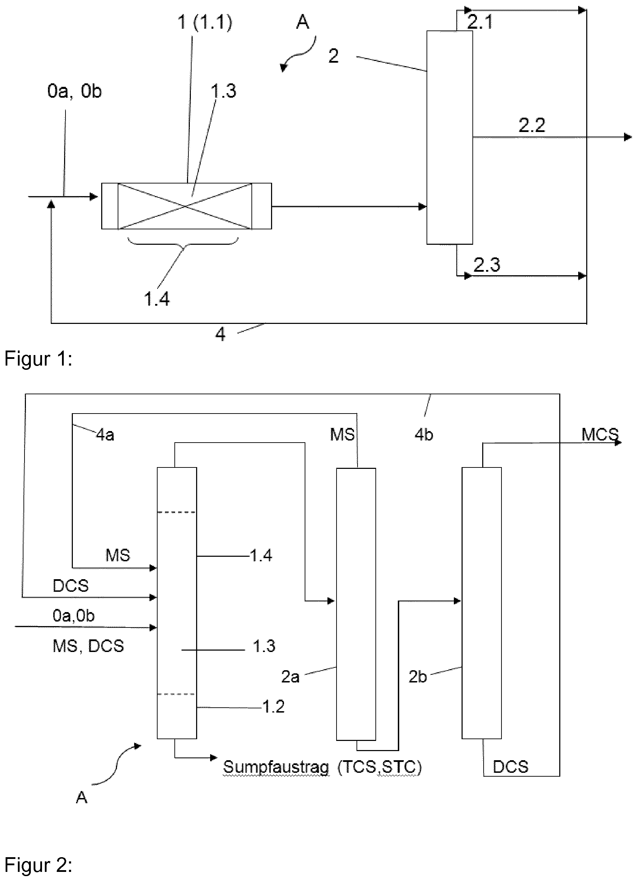

Eine Anlage zur Herstellung von Monochlorsilan aus Monosilan und Dichlorsilan, insbesondere zur kontinuierlichen Herstellung, vorzugsweise nach einem Verfahren nach einem der Ansprüche 1 bis 11 umfassend mindestens eine Eduktzuführung in einen Reaktionsbereich eines Reaktors, der Reaktionsbereich enthält einen Katalysator, vorzugsweise einen basischen Katalysator, wobei der Reaktor ggf. eine Kolonne, vorzugsweise eine Reaktivkolonne; einen Rohrreaktor, einen Schlaufenreaktor oder Rührkessel umfasst; ferner weist der Reaktor mindestens einen Reaktionsbereich auf, der mehrere Reaktionszonen umfassen kann; und dem Reaktor ist mindestens eine Kolonne, vorzugsweise zwei Kolonnen, zur thermischen Trennung des aus der Umsetzung von Monosilan und Dichlorsilan erhaltenen Rohproduktes zugeordnet. Eine besonders bevorzugte Anlage umfasst als Reaktor eine Reaktivkolonne mit mindestens einem Reaktionsbereich, und am unteren Ende und am oberen Ende der Reaktivkolonne wird jeweils ein Rohprodukt entnommen. Dem oberen Ende der Reaktivkolonne (Kopfrohprodukt) ist eine Kolonne, vorzugsweise eine erste Rektifikationskolonne, zugeordnet, in deren Mittelzulauf das Rohprodukt zugeführt wird (Figur 2). Nach einer Alternative kann der ersten Rektifikationskolonne an ihrem Sumpf eine Verbindungsleitung in den Reaktor oder einen vorgeschalteten Vorratsbehälter zugeordnet sein (Figur 1), insbesondere zur Rückführung von Dichlorsilan in den Reaktionsbereich. Am Kopf der ersten Rektifikationskolonne wird Monosilan erhalten (Figuren 1 und 2). Monochlorsilan wird als Mittelsieder über den Seitenstrom einer Kolonne entnommen und abgetrennt (Figur 1).

Eine weitere besonders bevorzugte Anlage umfasst mindestens einen Rohrreaktor mit mindestens einen Reaktionsbereich, wobei dem Rohrreaktor mindestens eine Kolonne, vorzugsweise zwei Kolonnen, zur thermischen Trennung des aus der Umsetzung von Monosilan und Dichlorsilan erhaltenen Rohproduktes zugeordnet sind. Gemäß einer besonders bevorzugten Ausführungsform umfasst die Anlage eine Reihenschaltung von Einheiten umfassend einen Rohrreaktor und mindestens einer Kolonne, bevorzugt von zwei Kolonnen; diese Einheiten können 1 bis 10fach hintereinander geschaltet werden oder parallel angeordnet sein. Weiter bevorzugt umfasst eine solche Einheit Verbindungsleitungen zur Eduktrückführung und/oder Eduktzuführung in alle Rohrreaktoren der Einheiten, um bei Eintritt der Edukte in den Rohrreaktor ein definiertes Verhältnis von Monosilan zu Dichlorsilan einstellen zu können, vorzugsweise von 8 bis 10 Mol-% DCS. Das Produkt Monochlorsilan wird aus jeder Einheit thermisch abgetrennt und gesammelt.

Nach einer weiteren Alternative kann der ersten Rektifikationskolonne an ihrem unteren Ende eine zweite Rektifikationskolonne zugeordnet sein, um das Sumpfprodukt (Rohprodukt Monochlorsilan) der ersten Rektifikationskolonne dem Mittelzulauf der zweiten Rektifikationskolonne zuzuführen. Am oberen Ende der ersten Rektifikationskolonne ist eine Verbindungsleitung zur Rückführung des Monosilans in den Reaktionsbereich oder einen vorgeschalteten Vorratsbehälter angeordnet. Als Kopfprodukte der zweiten Rektifikationskolonne wird reines Monochlorsilan entnommen (Figur 2). Am unteren Ende der zweiten Rektifikationskolonne ist eine Verbindungsleitung zur Rückführung von Dichlorsilan angeordnet.

Daher weist die Anlage vorzugsweise mindestens eine Kolonne auf, insbesondere mindestens eine Rektifikationskolonne, mit der im Verfahren vorhandenes Dichlorsilan und/oder Monosilan aus dem Rohprodukt abgetrennt wird, vorzugsweise ist sowohl dem oberen Ende als auch dem unteren Ende der Reaktivkolonne jeweils mindestens eine Rektifikationskolonne zugeordnet, wobei die, dem oberen Ende zugeordnete Rektifikationskolonne an ihrem oberen Ende eine Verbindungsleitung zur Eduktzuführung in den Reaktor oder einen dem Reaktor vorgeschalteten Vorausbehälter aufweist, in der das Dichlorsilan und/oder Monosilan der Umsetzung zugeführt wird. Gegebenenfalls weist eine der Rektifikationskolonnen 2a nachgeschaltete zweite Rektifikationskolonne 2b an ihrem unteren Ende eine Verbindungsleitung 4b zur Eduktrückführung in den Reaktor oder einen Vorratsbehälter 6a, 6b auf. Alternativ kann dem unteren Ende der Reaktivkolonne 1.2 eine Rektifikationskolonne 3a zugeordnet sein, an deren oberen Ende eine Verbindungsleitung 4b zur Eduktrückführung aufweist, optional sind Leergebinde zur Aufnahme von reinen Chlorsilanen lösbar den entsprechenden Rektifikationskolonnen zugeordnet.

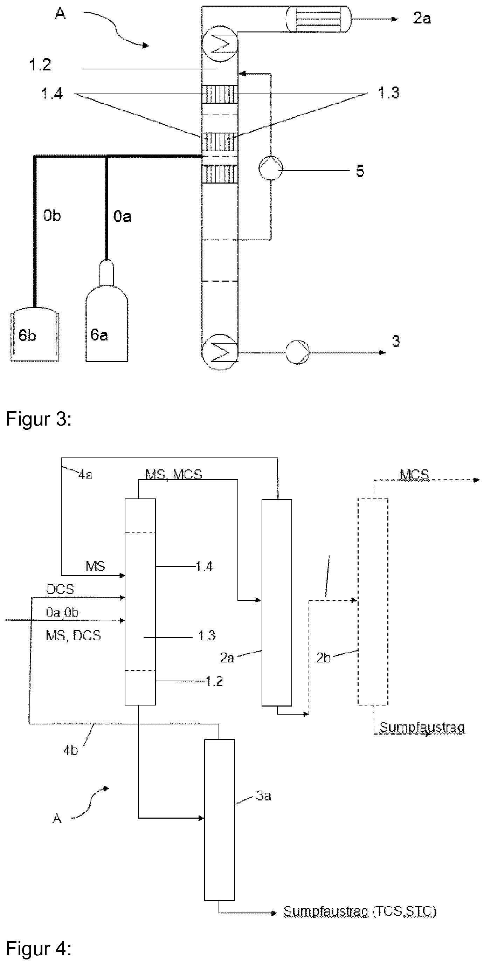

Gemäß einer bevorzugten Alternative wird der Reaktivkolonne Dichlorsilan ggf. im Reaktionsgemisch, unterhalb der Eduktzuführung entnommen und oberhalb der Eduktzuführung, vorzugsweise mittels einer Pumpe, erneut zugeführt (Figur 3).

Die Anlage zur Herstellung von Monochlorsilan umfasst einen Reaktionsbereich vorzugsweise in einem Reaktor, enthaltend den Katalysator zur Umsetzung von Monosilan und Dichlorsilan. Das im Reaktor oder Reaktionsbereich gebildete Rohprodukt wird in mindestens einen nachgeschalteten thermischen Trennverfahrensschritt überführt und Monochlorsilan gegebenenfalls im Gemisch mit höher chlorierten Silanen gewonnen. Vorzugsweise wird das Rohrprodukt mehreren thermischen Trennverfahrensschritten unterzogen und Monochlorsilan rein isoliert. Die erfindungsgemäße Anlage umfasst auch mindestens ein mit ihr lösbar verbindbares Leergebinde zur Aufnahme von Monochlorsilan, sowie ggf. entsprechende Leergebinde zur Aufnahme von reinem Tetrachlorsilan, Trichlorsilan. Das Leergebinde ist vorzugsweise einer Rektifikationskolonne zugeordnet. Die Leergebinde sind aus hochreinem, intertem Material und daher als Lager- und Transportbehälter für hochreines Monochlorsilan oder die anderen hochreinen Silane geeignet.

Entsprechend werden auch die weiteren nicht umgesetzten Edukte oder gebildete Nebenprodukte isoliert. Vorhandenes, aus dem Rohprodukt isoliertes Monosilan und Dichlorsilan werden vorzugsweise in dem Maße dem Reaktionsbereich wieder zugeführt, wie es notwendig ist, um das bevorzugte molare Verhältnis von Monosilan und Dichlorsilan von 15 : 1 bis 6 : 1, insbesondere von 13 : 1 bis 8 : 1, vorzugsweise von 12 : 1 bis 8 : 1, besonders bevorzugt von etwa 12 : 1 bis 9 : 1 (jeweils plus/minus 0,5) zusammen mit frischen Edukten (Monosilan und Dichlorsilan) einzustellen.

Der mindestens eine Reaktionsbereich, enthaltend den Katalysator, kann ein Bereich des Reaktors, wie einer Reaktivkolonne sein, beispielsweise ein Abschnitt einer Kolonne, wie vorzugsweise ein Glockenboden, Verteilerboden. Dem Fachmann ist klar, dass zur Verschiebung des Gleichgewichtes und zur Steigerung der Ausbeute eine Vielzahl an Reaktionsbereichen, d. h. mehrere Verteilerböden, vorgesehen sein können.

Unter einem Reaktor wird vorzugsweise eine abgeschlossene Baueinheit verstanden, wie vorzugsweise eine Reaktivkolonne, ein Rohrreaktor, Satzreaktor, Schlaufenreaktor, oder ein Seitenreaktor einer Kolonne, die einen Reaktionsbereich umfasst. Zweckmäßig kann auch ein Rührkessel sein.

Der mindestens eine thermische Trennverfahrensschritt wird vorzugsweise in einer Kolonne, insbesondere einer Destillationskolonne, besonders bevorzugt in einer Rektifikationskolonne mit Metallpackungen, besonders bevorzugt mit Hochleistungsmetallpackungen durchgeführt. Diese Kolonnen können über eine Vielzahl an theoretischen Böden verfügen. Dem Fachmann ist bekannt, dass er zur vollständigen Auftrennung des Rohproduktes in die enthaltenden Silane eine oder mehrere Kolonnen, insbesondere Rektifikationskolonnen verwenden kann, um das an der ersten Kolonne erhaltene Kopfprodukt weiter aufzutrennen als auch das im Sumpf der ersten Kolonne erhaltene Sumpfprodukt weiter aufzutrennen.

Die Erfindung wird im Folgenden anhand der in den Figuren dargestellten Ausführungsbeispiele näher erläutert. Es stellt dar:
- Figur 1:: Anlage mit Rohrreaktor zur Herstellung von Monochlorsilan durch Komproportionierung;
- Figur 2:: Anlage zur Herstellung von Monochlorsilan mit Reaktivkolonne und zwei nachgeschalteten Rektifikationskolonnen (2a, 2b);
- Figur 3:: Ausschnitt aus Anlage zur Herstellung von Monochlorsilan mit Reaktivdestillation;
- Figur 4:: Anlage zur Herstellung von Monochlorsilan mit Reaktivkolonne und zwei bis drei nachgeschalteten Rektifikationskolonnen (2a, (2b), 3a);

### Allgemeines Ausführungsbeispiel:

Eine Anlage **A** gemäß Figur 1 umfasst einen Rohrreaktor **1.1** mit Reaktionsbereich **1.4** und Katalysator **1.3** aus dem das Rohrprodukt in eine Kolonne **2** zur thermischen Auftrennung überführt wird, vorzugsweise werden zwei Kolonnen hintereinander geschaltet, der Reaktor mit Kolonne(n) kann auch als eine Einheit bezeichnet werden. Monochlorsilan **2.2** wird thermisch abgetrennt und gesammelt und Monosilan **2.1** und Dichlorsilan **2.3** werden thermisch abgetrennt und in einem definierten Verhältnis in den Rohrreaktor **1.1** zurückgeführt oder einem nachfolgenden Rohrreaktor **1.1**(2 bis n) als Eduktstrom zugeführt. Vorzugsweise wird MS in einen Rohrreaktor eindosiert und dann DCS in einem definierten Verhältnis zugegeben. Eine derartige Anlage kann im Kreislauf gefahren werden, wobei der Eduktstrom in den Reaktor immer auf eine definierte Zusammensetzung eingestellt wird oder eine Anlage kann mindestens zwei Einheiten, insbesondere drei bis 10 Einheiten umfassen. Der Rohrreaktor der Figur 1 kann auch mit dem Doppelkolonnensystem der Figur 2 kombiniert werden und als eine solche Einheit im Kreislauf gefahren werden. Alternativ können auch 2 bis n dieser Einheiten in Reihe geschaltet sein. Bevorzugt wird Monochlorsilan an einem Seitenstrom **2.2** der Rektifikationskolonne **2** (s. Figur 1) aus dem Kreislaufprozess entzogen.

Gemäß einer besonders bevorzugten Verfahrensvariante (Figur 3) werden Monosilan und Dichlorsilan in einen Reaktionsbereich **1.4** einer Kolonne **1.2,** insbesondere einer Reaktivkolonne **1.2,** zudosiert, wobei der Reaktionsbereich **1.4** vorzugsweise im Wesentlichen im mittleren Bereich der Kolonne ist (Figur 2, 3). Dies kann als Gemisch erfolgen, getrennt oder im Gegenstrom, d. h. Monosilan wird im unteren Bereich und Dichlorsilan im oberen Bereich des mittleren Bereichs der Kolonne zugeführt. Zusätzlich kann der Kolonne **1.2** Dichlorsilan oder ein Dichlorsilan enthaltendes Gemisch oberhalb des Sumpfes und unterhalb des Reaktionsbereiches **1.4** entnommen werden und der Kolonne oberhalb des Reaktionsbereiches oder in den Reaktionsbereich wieder zugeführt werden (Figur 3). Der Reaktionsbereich **1.4** der Kolonne **1.2** kann ggf. oberhalb und/oder unterhalb mit Rektifikationsbereichen kombiniert sein.
Das Kopfprodukt **2.1** der Kolonne **1.2** ist im Wesentlichen mit Leichtsiedern, wie dem gewünschten Produkt Monochlorsilan sowie Monosilan und Dichlorsilan angereichert. Das Monochlorsilan kann nach dem Fachmann geläufigen Methoden mittels thermischer Trennverfahrensschritte rein isoliert werden. So kann (i) (bspw. Figur 1) das Monochlorsilan als Mittelauf **2.2** einer Kolonne **2a** insbesondere einer Rektifikationskolonne **2a,** entnommen werden und Monosilan als Kopf- **2.1** und Dichlorsilan als Sumpfprodukt **2.3** oder (ii) (bspw. Figur 2) Monosilan als Kopfprodukt **2.1** und Monochlorsilan und Dichlorsilan als Sumpfprodukt **2.3** einer Rektifikationskolonne **2a,** das in einer nachfolgenden zweiten **2b** Kolonne in reines Monochlorsilan als Kopfprodukt und in Dichlorsilan als Sumpfprodukt aufgetrennt wird.

Das Sumpfprodukt **2.3** der Kolonne **2a** (bspw. Figur 1) ist im Wesentlichen mit Schwersiedern, wie Trichlorsilan, Tetrachlorsilan angereichert und enthält ggf. zudem Dichlorsilan, und wird vorzugsweise in nachgeschalteten thermischen Trennverfahrensschritten, vorzugweise in mindestens einer weiteren Rektifikationskolonne **2b** weiter aufgetrennt. So kann Trichlorsilan zusammen mit ggf. Dichlorsilan über Kopf und Tetrachlorsilan über den Sumpf von **2b** ausgeschleust werden. Trichlorsilan und Dichlorsilan können dann anschließend über eine weitere Kolonne **2c** getrennt werden. Wird Dichlorsilan am Kopf der Rektifikationskolonne 2b ausgeschleust, dann werden Trichlorsilan und Tetrachlorsilan am Sumpf ausgeschleust und in einer weiteren Kolonne **2c** aufgetrennt. Alternativ kann Trichlorsilan dem Mittellauf der Rektifikationskolonnen **2b** entnommen werden und Dichlorsilan am Kopf und Tetrachlorsilan am Sumpf.

Eine bevorzugte Anlage A zur Herstellung von Monochlorsilan umfasst einen als Reaktivkolonne **1.2** ausgeführten Reaktor **1,** der den Katalysator **1.3** im Reaktionsbereich **1.4** enthält, und der direkt mit mindestens einer Rektifikationsapparatur **2, 3** verbunden ist (Figur 2, 3). Die Rektifikationsapparatur **2**, **3** hat die Aufgabe gebildetes Monochlorsilan im Seitenstrom (Figur 1) von nicht umgesetzten Edukten Monosilan und Dichlorsilan abzutrennen. Eine alternative Anlage **A** zur Herstellung von Monochlorsilan umfasst einen als Rohrreaktor 1.1 ausgeführten Reaktor **1,** der den Katalysator **1.3** enthält, und der direkt mit mindestens einer Rektifikationsapparatur **2, 3** verbunden ist (Figur 1). In einer weiteren Ausführungsform (Figur 2) wird Monochlorsilan am Kopf der Rektifikationskolonne **2b** auskondensiert und flüssig dem System entzogen. Monosilan verbleibt in der Anlage und ist weiterhin für die Reaktion verfügbar. Vorzugsweise wird es über eine Verbindungsleitung **4a** in definierter Menge in den Reaktionsbereich **1.4** zurück geführt. Dichlorsilan wird als Sumpf der Kolonne **2b** ausgeschleust und mittels einer Verbindungsleitung **4b** in den Reaktor zurückgeführt.

### Bezugszeichenliste:

- A: Anlage
- 0a, 0b: Eduktzuführung
- 1: Reaktor
- 1.1: Rohrreaktor
- 1.2: Reaktivkolonne
- 1.3: Katalysator
- 1.4: Reaktionsbereich
- 2: Kolonne, insbesondere Rektifikationskolonne
- 2a, 2b,...: Kolonne(n) stromabwärts am oberen Ende der Reaktivkolonne
- 2.1: Kolonnenkopf
- 2.2: Seitenstrom
- 2.3: Kolonnensumpf
- 3 (3a, 3b,...): Kolonne(n) stromabwärts am unteren Ende der Reaktivkolonne
- 4 (4a, 4b,...): Verbindungsleitung
- 5: Pumpe
- 6a, 6b: Vorratsbehälter

**Silane:** MS = Monosilan; DCS = Dichlorsilan; MCS = Monochlorsilan;
TCS = Trichlorsilan; STC = Tetrachlorsilan

### Beispiele:

### Allgemeine Herstellbeispiele:

Katalysator: Di-isobutylaminopropyltriethoxysilan bzw. mit dessen Hydrolyse- und/oder Kondensationsprodukten modifizierte Keramikkugeln (Durchmesser circa 0,5 cm). Die Herstellung ist in DE 371444 A1 beschrieben, deren Offenbarungsgehalt vollständig zum Inhalt dieses Dokumentes gemacht wird. Zur Herstellung wird das Aminosilan in Gegenwart von wasserhaltigem Alkohol, wie Ethanol oder Methanol, der vorzugsweise dem abgespaltenen Hydrolysealkohol des Silan entspricht, auf kugelförmiges SiO₂-Trägermaterial fixiert und getrocknet, ggf. im Vakuum und unter erhöhter Temperatur.

### Verfahren und Anlage:

a) Das Verfahren wird in einer Anlage **A** gemäß Figur 1 durchgeführt. Der Reaktor **1** mit Reaktionsbereich **1.4,** bspw. ein Rohrreaktor **1.1,** mit mindestens einer Eduktzuführung (**0a, 0b**), wobei der Reaktionsbereich **1.4** den Katalysator **1.3** enthält. Monosilan und Dichlorsilan werden in einem definiertem Molverhältnis zugeführt und im Reaktionsbereich **1.4** des Reaktors **1** umgesetzt. Die den Reaktor verlassenden Substanzen Monosilan, Monochlorsilan und Dichlorsilan werden einer Rektifikationsapparatur **2,** insbesondere einer Rektifikationskolonne **2,** zugeführt und hier destillativ aufgetrennt. Monochlorsilan wird als Seitenstrom **2.2** der Kolonne **2** entzogen, Monosilan wird über den Kolonnenkopf **2.1** abgezogen und Dichlorsilan und ggf. gebildetes Trichlorsilan und/oder Tetrachlorsilan werden über den Kolonnensumpf **2.3** abgenommen. Alternativ ist es bevorzugt, wenn Monochlorsilan an einem Seitenstrom einer Reaktivkolonne **1.2** (nicht in Figuren dargestellt), insbesondere einer Rektifikationskolonne **2** (s. Figur 1). Das Sumpfprodukt kann einer weiteren Rektifikation in mindestens einer Rektifikationskolonne **3** zugeführt werden und dort in Dichlorsilan sowie in die höherer chlorierten Silane aufgetrennt werden. Zur weiteren Auftrennung kann mindestens eine weitere Kolonne **3'** genutzt werden. Monosilan und/oder Dichlorsilan oder sie enthaltende Gemische werden dem Reaktor **1** mittels einer Verbindungsleitung **4** wieder als Edukte zugeführt. Dem Reaktor **1** werden neben diesen rückgeführten Silanen, dem stöchiometrisch gebildeten und entnommenen Monochlorsilan entsprechend, in stöchiometrischen Verhältnis Monosilan und Dichlorsilan zugeführt, insbesondere wird kontinuierlich das Verhältnis von etwa 20 : 1 bis 6 : 1, besonders bevorzugt 19 : 1 bis 8 : 1 eingestellt, alternativ auch von 13 : 1 bis 8 : 1, vorzugsweise von 12 : 1 bis 8 : 1 eingestellt.
b) Ein Herstellprozess wird in einer Anlage **A** gemäß Figur 3 durchgeführt. In der dargestellten Anlage kann das erfindungsgemäße Verfahren kontinuierlich durchgeführt werden. Erfindungsgemäß erfolgt die Überführung in die Destillationskolonnen über einen Mittelzulauf in die Kolonne. Beim Herstellprozess werden dem, den Katalysator **1.3** enthaltenden Reaktionsbereich **1.4** Monosilan und Dichlorsilan (Vorratsbehälter **6a, 6b**) im Molverhältnis 1 : 1 zugeführt (Eduktzuführung **0a, 0b**) und dort umgesetzt. In der Anlage nach Figur 3 wird Dichlorsilan unterhalb der Eduktzuführung **(0a, 0b)** der Kolonne **1.2** entnommen und oberhalb der Eduktzuführung **0a,** vorzugsweise mittels einer Pumpe **5,** erneut der Reaktivkolonne **1.2** zugeführt.

Aus der als Reaktivkolonne **1.2** ausgelegten Destillationskolonne werden die folgenden Substanzen Monosilan, Monochlorsilan Dichlorsilan und gegebenenfalls Trichlorsilan Siliziumtetrachlorid erhalten. Sie werden mindestens einer Rektifikationsapparatur **(2, 3)** zugeführt und dort destillativ in die einzelnen Silane aufgetrennt. Dabei verlassen Monosilan und Monochlorsilan die Reaktivkolonne **1.2** über Kopf (Überführung in mindestens eine Kolonne **2a, 2b,...),** gegebenenfalls gebildetes Trichlorsilan und Siliziumtetrachlorid werden über den Kolonnensumpf ausgeschleust (Überführung in mindestens eine Kolonne **3a, 3b,...).**

### Alternativen zum Ausschleusen von Dichlorsilan:

B.1) Bei Ausschleusung von Dichlorsilan über den Sumpf wird das Dichlorsilan zusammen mit TCS und STC in eine nachgeschaltete Destillationskolonne 3a überführt und dort als Kopfprodukt erhalten und vorzugsweise wieder in den Reaktionsbereich (Figur 4) zurückgeführt, während TCS und STC als Sumpfprodukt ausgeschleust werde. TCS und STC können nach Bedarf in einer weiteren Kolonne 3b in die Einzelverbindungen aufgetrennt werden. Das am Kopf der Reaktivkolonne **1.2** erhaltene Gemisch umfassend Monosilan und Monochlorsilan wird in eine Destillationskolonne **2a** überführt, vorzugsweise als Mittelzulauf. Am Kopf der Destillationskolonne **2a** wird Monosilan abgetrennt und über eine Verbindungsleistung **4a** in den Reaktionsbereich **1.4** zurückgeführt, während Monochlorsilan ggf. als Rohprodukt am Sumpf abgezogen wird. Sofern eine weitere Aufreinigung des Monochlorsilan notwendig ist wird es in einer weiteren Destillationskolonne **2b,** vorzugsweise als Mittelzulauf, überführt und reines Monochlorsilan als Kopfprodukt der Kolonne **2b** erhalten (s. Figur 4).
B.2) Bei Abtrennung von Dichlorsilan über den Kopf der Reaktivkolonne **1.2** werden (Figur 3) Monosilan, Monochlorsilan und Dichlorsilan in eine Destillationskolonne **2a** überführt, vorzugsweise als Mittelzulauf. Am Kopf der Kolonne **2a** wird Monosilan erhalten und in den Reaktionsbereich **1.4** über eine Verbindungsleitung **4a** in den Reaktor **1** oder in den Reaktionsbereich **1.4** zurückgeführt, während Monochlorsilan und Dichlorsilan als Sumpffraktion in eine weitere Destillationskolonne **2b,** vorzugsweise als Mittelzulauf, überführt werden. Am Kopf dieser Kolonne wird reines Monochlorsilan abgetrennt, das in einem Leergebinde aufgefangen wird. Als Sumpfprodukt an 2b wird Dichlorsilan erhalten, das dem in den Reaktor **1** oder Reaktionsbereich **1.4** mittels einer Verbindungsleitung **4b** eingeleitet bzw. rückgeführt wird.

Je nach Fahrweise wird nicht umgesetztes Dichlorsilan über Kopf oder am Sumpf mit abgetrennt. Sowohl das Kopf- als auch das Sumpfrohprodukt werden getrennt mit mindestens einer Rektifikationsapparatur (Kopfrohprodukte: Kolonnen stromabwärts 2a, 2b, 2c etc.; Sumpfrohprodukte: Kolonnen stromabwärts 3a, 3b, 3c etc.) weiter aufgereinigt.

### Vergleichsbeispiel (Dismutierung ausgehend von Dichlorsilan):

Dichlorsilan wurde bei einem Druck von 30 bar und einer Temperatur von 40 °C in einen Rohrreaktor mit einem Innendurchmesser von 20 cm und 2,8 m Länge mit 10 mol/h dosiert. Als Katalysator wurden Di-isobutylaminopropyltriethoxysilan modifizierte Keramikkugeln eingesetzt (Durchmesser circa 0,5 cm, Einsatzmenge ca. 54 kg Katalysatorkugeln). Am Reaktorausgang wurden als Rohprodukt ein Gemisch aus Monosilan, Monochlorsilan, Dichlorsilan und geringem Gehalt an Siliziumtetrachlorid erhalten.

**Zusammensetzung Rohprodukt in Mol-%:**

| | |
|---|---|
| Monosilan: | 14,18 % |
| Monochlorsilan: | 10,95 % |
| Dichlorsilan: | 38,03 % |
| Trichlorsilan: | 36,22 % |
| Siliziumtetrachlorid | 0,59 % |

Bei der reinen Dismutierung ausgehend von Dichlorsilan entstehen neben dem Zielprodukt Monochlorsilan große Mengen an Trichlorsilan und Monosilan als Nebenprodukte, die aus dem Prozess entfernt werden müssen. Die Selektivität zu Monochlorsilan ist niedrig. Das nicht umgesetzte Dichlorsilan kann wieder in den Prozess zurück geführt werden.
Die Zusammensetzung des Rohprodukts wurde mittels GC bestimmt.

### Beispiel 1: Komproportionierung

Monosilan und Dichlorsilan wurden im molaren Verhältnis 92 Mol-% und 8 Mol-% bei einem Druck von 30 bar und einer Temperatur von 40 °C einem Rohrreaktor in einen Rohrreaktor mit einem Innendurchmesser von 20 cm und 2,8 m Länge mit 10 mol/h dosiert. Als Katalysator wurden Di-isobutylaminopropyltriethoxysilan modifizierte Keramikkugeln eingesetzt (Durchmesser circa 0,5 cm, Einsatzmenge ca. 54 kg Katalysatorkugeln). Am Reaktorausgang wurden als Rohprodukt Monosilan, Monochlorsilan und Dichlorsilan mit einem geringen Gehalt an Trichlorsilan erhalten. Zusammensetzung Rohprodukt in Mol-%:

| | |
|---|---|
| Monosilan: | 85,99 % |
| Monochlorsilan: | 8,40 % |
| Dichlorsilan: | 5,25 % |
| Trichlorsilan: | 0,37 % |

Dieses Rohprodukt wurde in einem Doppelkolonnensystem aufgetrennt. Dabei wurde Monochlorsilan abgetrennt und dem Verfahren entzogen. Monosilan wurde abgetrennt und dem Verfahren erneut zugeführt. Anschließend wurde das mit Trichlorsilan verunreinigte Dichlorsilan in dem Maße zudosiert, um erneut eine Zusammensetzung von etwa 92 Mol-% Monosilan und 8 Mol-% Dichlorsilan für eine weitere Umsetzung am Katalysator in einem zweiten Rohrreaktor einzustellen. Das Rohprodukt der zweiten Umsetzung wies eine Zusammensetzung in Mol-% von auf:

| | |
|---|---|
| Monosilan: | 85,62 % |
| Monochlorsilan: | 8,33 % |
| Dichlorsilan: | 5,32 % |
| Trichlorsilan: | 0,73 % |

Dieses zweite Rohprodukt wurde in einem Doppelkolonnensystem aufgetrennt. Dabei wurde Monochlorsilan abgetrennt und dem Verfahren entzogen. Monosilan wurde abgetrennt und dem Verfahren erneut zugeführt. Anschließend wurde das mit geringen Mengen an Trichlorsilan verunreinigte Dichlorsilan in dem Maße zudosiert, um erneut eine Zusammensetzung von etwa 92 Mol-% Monosilan und 8 Mol-% Dichlorsilan für eine weitere Umsetzung am Katalysator in einem zweiten Rohrreaktor einzustellen. Das Rohprodukt der dritten Umsetzung wies eine Zusammensetzung in Mol-% von auf:

| | |
|---|---|
| Monosilan: | 85,19 % |
| Monochlorsilan: | 8,35 % |
| Dichlorsilan: | 5,46 % |
| Trichlorsilan: | 1,00 % |

Dieses dritte Rohprodukt wurde ebenfalls in einem Doppelkolonnensystem aufgetrennt. Dichlorsilan und Trichlorsilan wurden anschließend destillativ getrennt. Dichlorsilan könnte als reines Dichlorsilan erneut dem Verfahren zugeführt werden. Die Zusammensetzung der Rohprodukte wurde für Monosilan, Monochlorsilan und Dichlorsilan mittels GC bestimmt. Der geringe Gehalt des Nebenproduktes Trichlorsilan wurde mittels NMR ermittelt.

Bei der Komproportionierung ausgehend von Dichlorsilan und Monosilan entstehen bei Wahl des richtigen Mischungsverhältnisses neben dem Zielprodukt Monochlorsilan nur sehr geringe Anteile an Nebenprodukten (Trichlorsilan) die aus dem Prozess entfernt werden müssen. Nicht umgesetzte Edukte können wieder in den Prozess zurück geführt werden.

### Beispiel 2:

Dichlorsilan und Monosilan wurden im molaren Verhältnis von 1 : 1 bei einem Druck von 20 bar mit einer Rate von 100g / h bzw. 1,5 mol/h (entspricht 24,1 g Monosilan und 75,9 g Dichlorsilan bei einer Temperatur von 18,5 °C in den Mittelzulauf (Reaktionsbereich) einer Reaktivkolonne (10 cm Innendurchmesser, 1,5 m Länge, 32 theoretische Böden, 1,6 I Volumen) zudosiert. Als Katalysator wurde Di-isobutylaminopropyltriethoxysilan modifizierte Keramikkugeln eingesetzt (Durchmesser circa 0,5 cm, Einsatzmenge: 5,5 kg Katalysatorkugeln). Am Kolonnensumpf wurden bei einer Temperatur von 158,6°C (20 bar) kontinuierlich 33,4 g/h abgezogen. Zusammensetzung des Sumpfprodukts

**(GC %)**

| | |
|---|---|
| Monosilan | 0,00 |
| Monochlorsilan | 0,00 |
| Dichlorsilan | 0,10 |
| Trichlorsilan | 89,70 |
| Siliziumtetrachlorid | 10,20 |

Am Kolonnenkopf wurde bei einer Temperatur von 6,9°C (20 bar) kontinuierlich 66,6 g/h abgezogen. Zusammensetzung des Kopfprodukts (GC %,)

| | |
|---|---|
| Monosilan | 31,40 |
| Monochlorsilan | 46,27 |
| Dichlorsilan | 22,23 |
| Trichlorsilan | 0,10 |
| Siliziumtetrachlorid | 0,00 |

Der Sumpfstrom wird in diesem Beispiel komplett ausgeschleust. Die Aufarbeitung des Kopfstroms kann mittels dem Fachmann geläufigen destillativen Methoden aufgetrennt werden. In einem Zwei-Kolonnensystem: 1 ste Kolonne Monosilan über Kopf, MCS und DCS im Sumpf (vgl. Fig.: 2), 2te Kolonne MCS über Kopf, DCS im Sumpf. Alternativ kann in einer Destillationskolonne Monochlorsilan über eine Seitenstromabnahme der Kolonne entzogen werden und Monosilan wird über den Kolonnenkopf abgezogen sowie Dichlorsilan die Rektifikationskolonne über den Kolonnensumpf verlässt (Fig. 1). Trichlorsilan fällt als weiterer Nebenstrom an.

Monosilan und Dichlorsilan können nach Entnahme aus der Rektifikation dem Reaktionsbereich wieder zugeführt werden. Der Reaktor erhält neben diesen Mengen zusätzlich die der gebildeten und entnommenen Monochlorsilanmenge stöchiometrisch entsprechende Menge an Monosilan und Dichlorsilan.

### Beispiel 3:

Dichlorsilan und Monosilan wurden im molaren Verhältnis von 1 : 1 bei einem Druck von 20 bar mit einer Rate von 100g / h bzw. 1,5 mol/h (entspricht 24,1 g Monosilan und 75,9 g Dichlorsilan bei einer Temperatur von 18,5 °C in den Mittelzulauf (Reaktionsbereich) der Reaktivkolonne (10 cm Innendurchmesser, 1,5 m Länge, 32 theoretische Böden, 1,6 I Volumen) zudosiert. Als Katalysator wurde Di-isobutylaminopropyltriethoxysilan modifizierte Keramikkugeln eingesetzt (Durchmesser circa 0,5 cm, Einsatzmenge: 5,5 kg Katalysatorkugeln). Am Kolonnensumpf wurde bei einer Temperatur von 140,1 °C (20 bar) kontinuierlich 61,9 g/h abgezogen (Figur 4). Zusammensetzung des Sumpfprodukts (GC %)

| | |
|---|---|
| Monosilan | 0,00 |
| Monochlorsilan | 0,00 |
| Dichlorsilan | 30,22 |
| Trichlorsilan | 68,90 |
| Siliziumtetrachlorid | 0,78 |

Am Kolonnenkopf wurde bei einer Temperatur von -26,9°C (20 bar) kontinuierlich 38,1 g/h abgezogen. Zusammensetzung des Kopfprodukts (GC %)

| | |
|---|---|
| Monosilan | 69,54 |
| Monochlorsilan | 30,36 |
| Dichlorsilan | 0,10 |
| Trichlorsilan | 0,00 |
| Siliziumtetrachlorid | 0,00 |

Der Sumpfstrom in diesem Beispiel wird über eine Kolonne **3a** destilliert. Am Kopf wird DCS (Dichlorsilan) abgenommen und in den Prozess zurückgeführt **4b.** TCS (Trichlorsilan) und STC (Silantetrachlorid) im Sumpf werden ausgeschleust. Der Kopfstrom wird über eine Kolonne **2a** destilliert, wobei Monosilan im Kopf und MCS (Monochlorsilan) im Sumpf erhalten wird. Bei Bedarf kann MCS weiter aufgereinigt werden, beispielsweise über eine weitere Kolonne **2b.**

Um MCS in hoher Reinheit zu erhalten, erfolgt eine weitere Destillation über Kopf **2b.** Monosilan und Dichlorsilan werden nach Entnahme aus der Rektifikation dem Reaktionsbereich wieder zugeführt. Der Reaktor erhält neben diesen Mengen zusätzlich die der gebildeten und entnommenen Monochlorsilanmenge stöchiometrisch entsprechende Menge an Monosilan und Dichlorsilan.

## Patentansprüche

1. Verfahren zur Herstellung von Monochlorsilan,
**dadurch gekennzeichnet, dass**
Monosilan und Dichlorsilan als Edukte in Gegenwart eines Katalysators umgesetzt werden und Monochlorsilan gebildet wird,
wobei Monosilan und Dichlorsilan im molaren Verhältnis von 13 : 1 bis 8 : 1 als Edukte dem Verfahren zugeführt werden,
die Umsetzung von Monosilan und Dichlorsilan zu Monochlorsilan im Temperaturbereich - 50 °C bis 200 °C durchgeführt wird und im Druckbereich 0,0001 bar bis 200 bar(abs.) durchgeführt wird und
eine Stickstoff enthaltende Verbindung als Katalysator zur Komproportionierung verwendet wird.

2. Verfahren nach Anspruch 1,
**dadurch gekennzeichnet, dass**
Monochlorsilan in einem kontinuierlichen Verfahren aus Monosilan und Dichlorsilan gebildet wird.

3. Verfahren nach Anspruch 1 oder 2,
**dadurch gekennzeichnet, dass**
Monosilan und Dichlorsilan einem Reaktionsbereich getrennt, im Gemisch oder im Gegenstrom zugeführt werden.

4. Verfahren nach einem der Ansprüche 1 bis 3,
**dadurch gekennzeichnet, dass**
die Umsetzung, insbesondere die Komproportionierung, in einem Reaktionsbereich **(1.4)** eines Reaktors **(1),** wie einer Reaktivkolonne **(1.2),** Rührkessel, Rohrreaktor **(1.1)** oder Schlaufenreaktor, durchgeführt wird, vorzugsweise in einer Reaktivkolonne **(1.2)** mit mehreren Reaktionsbereichen.

5. Verfahren nach einem der Ansprüche 1 bis 4,
**dadurch gekennzeichnet, dass**
zumindest ein Teil des Rohproduktes in mindestens einem nachgeschalteten thermischen Trennverfahrensschritt in die einzelnen Silane Monochlorsilan sowie Monosilan, Dichlorsilan und gegebenenfalls Trichlorsilan und/oder Tetrachlorsilan aufgetrennt wird.

6. Verfahren nach einem der Ansprüche 1 bis 5,
**dadurch gekennzeichnet, dass**
das im Wesentlichen bei der Umsetzung von Monosilan und Dichlorsilan die Bildung von Trichlorsilan und/oder Tetrachlorsilan unterdrückt wird, insbesondere erfolgt die Umsetzung von Monosilan und Dichlorsilan in einem definiertem molaren Verhältnis.

7. Verfahren nach einem der Ansprüche 1 bis 6,
**dadurch gekennzeichnet, dass**
nach der Umsetzung und gegebenenfalls dem thermischen Trennverfahrensschritt vorhandenes Monosilan und/oder Dichlorsilan jeweils unabhängig oder im Gemisch als Edukte dem Reaktionsbereich (1.4) wieder zugeführt werden.

8. Verfahren nach einem der Ansprüche 1 bis 7,
**dadurch gekennzeichnet, dass**
der Katalysator geträgert ist, insbesondere ist er chemisch an das Trägermaterial gebunden.

9. Verfahren nach einem der Ansprüche 1 bis 8,
**dadurch gekennzeichnet, dass**
der Katalysator ein Aminoalkoxysilan, ein Hydrolyse- und/oder Kondensationsprodukt davon umfasst, das vorzugsweise chemisch auf dem Trägermaterial gebunden vorliegt.

10. Verfahren nach einem der Ansprüche 1 bis 9,
**dadurch gekennzeichnet, dass**
der Katalysator ein Aminoalkoxysilan der allgemeinen Formel 1 ist oder mindestens ein Hydrolyse- und/der Kondensationsprodukt davon umfasst
(CₓH₂ₓ₊₁O)₃Si(CH₂)_{z}N(C_{y}H_{2y+1})₂ (1)
mit x=1 bis 4; y = 1 bis 10; z = 1 bis 3 ist oder ein daraus abgeleitetes chemisch auf dem Trägermaterial gebundenes monomeres oder oligomeres Aminosilan.

11. Verfahren nach einem der Ansprüche 8 bis 10,
**dadurch gekennzeichnet, dass**
das Trägermaterial Siliziumoxid umfassende Formkörper sind.

12. Verwendung von Stickstoff enthaltenden Verbindungen als Katalysator zur Komproportionierung in einem Verfahren zur Herstellung mindestens eines Halogensilans, indem als Edukte Monosilan und Dichlorsilan eingesetzt werden.

## Claims

1. Process for preparing monochlorosilane, **characterized in that**
monosilane and dichlorosilane as starting materials are reacted in the presence of a catalyst and monochlorosilane is formed,
wherein monosilane and dichlorosilane are supplied as starting materials to the process in a molar ratio of from 13:1 to 8:1,
the reaction of monosilane and dichlorosilane to form monochlorosilane is carried out in the temperature range from -50°C to 200 °C and in the pressure range from 0.0001 bar to 200 bar(abs.) and a nitrogen-containing compound is used as catalyst for comproportionation.

2. Process according to Claim 1,
**characterized in that**
monochlorosilane is formed from monosilane and dichlorosilane in a continuous process.

3. Process according to Claim 1 or 2,
**characterized in that**
monosilane and dichlorosilane are fed separately, in admixture or in countercurrent into a reaction region.

4. Process according to any of Claims 1 to 3,
**characterized in that**
the reaction, in particular the comproportionation, is carried out in a reaction region (**1.4**) of a reactor (**1**) such as a reactive column (**1.2**), stirred vessel, tube reactor (**1.1**) or loop reactor, preferably in a reactive column (**1.2**) having a plurality of reaction regions.

5. Process according to any of Claims 1 to 4,
**characterized in that**
at least part of the crude product is separated in at least one downstream thermal separation process step into the individual silanes monochlorosilane and also monosilane, dichlorosilane and possibly trichlorosilane and/or tetrachlorosilane.

6. Process according to any of Claims 1 to 5,
**characterized in that**
the formation of trichlorosilane and/or tetrachlorosilane is substantially suppressed in the reaction of monosilane and dichlorosilane, and in particular the reaction of monosilane and dichlorosilane is carried out in a defined molar ratio.

7. Process according to any of Claims 1 to 6,
**characterized in that**
monosilane and/or dichlorosilane present after the reaction and optionally the thermal separation process step are returned, in each case independently or in admixture, as starting materials to the reaction region (1.4).

8. Process according to any of Claims 1 to 7,
**characterized in that**
the catalyst is supported, and is in particular chemically bound to the support material.

9. Process according to any of Claims 1 to 8,
**characterized in that**
the catalyst comprises an aminoalkoxysilane or a hydrolysis and/or condensation product thereof which is preferably chemically bound to the support material.

10. Process according to any of Claims 1 to 9,
**characterized in that**
the catalyst comprises an aminoalkoxysilane of the general formula 1 or at least one hydrolysis and/or condensation product thereof
(CₓH₂ₓ₊₁O)₃Si(CH₂)_{z}(C_{y}H_{2y+1})₂ (1)
where x=1 to 4; y = 1 to 10; z = 1 to 3, or a monomeric or oligomeric aminosilane derived therefrom which is chemically bound to the support material.

11. Process according to any of Claims 8 to 10,
**characterized in that**
the support material is shaped bodies comprising silicon oxide.

12. Use of nitrogen-containing compounds as catalyst for comproportionation in a process for preparing at least one halosilane, in which monosilane and dichlorosilane are used as starting materials.

## Revendications

1. Procédé pour la préparation de monochlorosilane, **caractérisé en ce que** du monosilane et du dichlorosilane sont transformés en tant que produits de départ en présence d'un catalyseur et du monochlorosilane est formé, le monosilane et le dichlorosilane étant introduits dans un rapport molaire de 13:1 à 8:1 comme produits de départ dans le procédé, la transformation du monosilane et du dichlorosilane en monochlorosilane étant réalisée dans une plage de température de -50°C à 200°C et dans une plage de pression de 0,0001 bar à 200 bars (abs.) et un composé contenant de l'azote étant utilisé comme catalyseur pour la médiamutation.

2. Procédé selon la revendication 1, **caractérisé en ce que** le monochlorosilane est formé dans un procédé continu à partir de monosilane et de dichlorosilane.

3. Procédé selon la revendication 1 ou 2, **caractérisé en ce que** le monosilane et le dichlorosilane sont introduits séparément, en mélange ou à contre-courant dans une zone de réaction.

4. Procédé selon l'une quelconque des revendications 1 à 3, **caractérisé en ce que** la transformation, en particulier la médiamutation, est réalisée dans une zone de réaction (1.4) d'un réacteur (1), tel qu'une colonne réactive (1.2), une cuve agitée, un réacteur tubulaire (1.1) ou un réacteur à boucle à circulation interne, de préférence dans une colonne réactive (1.2) présentant plusieurs zones de réaction.

5. Procédé selon l'une quelconque des revendications 1 à 4, **caractérisé en ce qu'**au moins une partie du produit brut est séparée dans au moins une étape de procédé de séparation thermique disposée en aval en les différents silanes monochlorosilane ainsi que monosilane, dichlorosilane et le cas échéant trichlorosilane et/ou tétrachlorosilane.

6. Procédé selon l'une quelconque des revendications 1 à 5, **caractérisé en ce que** la formation de trichlorosilane et/ou de tétrachlorosilane est supprimée essentiellement lors de la transformation du monosilane et du dichlorosilane, la transformation du monosilane et du dichlorosilane ayant en particulier lieu dans un rapport molaire défini.

7. Procédé selon l'une quelconque des revendications 1 à 6, **caractérisé en ce que** le monosilane et/ou le dichlorosilane présent(s) après la transformation et le cas échéant après l'étape de procédé de séparation thermique peu(ven)t être recyclé(s) à chaque fois indépendamment ou en mélange comme produits de départ dans la zone de réaction (1.4).

8. Procédé selon l'une quelconque des revendications 1 à 7, **caractérisé en ce que** le catalyseur est supporté, en particulier lié chimiquement au matériau support.

9. Procédé selon l'une quelconque des revendications 1 à 8, **caractérisé en ce que** le catalyseur comprend un aminoalcoxysilane, un produit d'hydrolyse et/ou de condensation de celui-ci, qui se trouve de préférence sous forme chimiquement liée sur le matériau support.

10. Procédé selon l'une quelconque des revendications 1 à 9, **caractérisé en ce que** le catalyseur est un aminoalcoxysilane de formule générale 1 ou comprend au moins un produit d'hydrolyse et/ou de condensation de celui-ci
CₓH₂ₓ₊₁O)₃Si(CH₂)_{z}N(C_{y}H_{2y+1})₂ (1)
avec x = 1 à 4 ; y = 1 à 10 ; z = 1 à 3 ou un aminosilane monomère ou oligomère dérivé de celui-ci, chimiquement lié sur le matériau support.

11. Procédé selon l'une quelconque des revendications 8 à 10, **caractérisé en ce que** le matériau support est formé de corps façonnés comprenant de l'oxyde de silicium.

12. Utilisation de composés contenant de l'azote comme catalyseur pour la médiamutation dans un procédé pour la préparation d'au moins un halogénosilane dans lequel du monosilane et du dichlorosilane sont utilisés comme produits de départ.
